**Europäisches Patentamt**

**European Patent Office**

**Office européen des brevets**

(19)

(11) Veröffentlichungsnummer : **0 060 909**
**B1**

(12) **EUROPÄISCHE PATENTSCHRIFT**

(45) Veröffentlichungstag der Patentschrift :
26.09.84

(21) Anmeldenummer : **81102152.6**

(22) Anmeldetag : **23.03.81**

(51) Int. Cl.³ : **G 06 F 9/38**, G 06 F 7/48

(54) **Anordnung in einer Datenverarbeitungseinrichtung zur Verkürzung der Zykluszeit.**

(43) Veröffentlichungstag der Anmeldung :
**29.09.82 Patentblatt 82/39**

(45) Bekanntmachung des Hinweises auf die Patenterteilung : **26.09.84 Patentblatt 84/39**

(84) Benannte Vertragsstaaten :
**DE FR GB IT**

(56) Entgegenhaltungen :
**DE-A- 2 717 311**
**IEEE TRANSACTIONS ON COMPUTERS, Band C-27, Nr. 9, September 1978, Seiten 855-865 New York, U.S.A. J.R. JUMP et al.: "Effective pipelining of digital systems"**
**PROCEEDINGS OF THE ANNUAL SYMPOSIUM ON COMPUTER ARCHITECTURE, 9th-11th December 1973, IEEE 1973, Seiten 71-76, New York, U.S.A. P.M. KOGGE: "Maximal rate pipelined solutions to recurrence problems"**

(73) Patentinhaber : **IBM DEUTSCHLAND GMBH**
**Pascalstrasse 100**
**D-7000 Stuttgart 80 (DE)**
**DE**
**International Business Machines Corporation**
**Old Orchard Road**
**Armonk, N.Y. 10504 (US)**
**FR GB IT**

(72) Erfinder : **Bazlen, Dieter, Dr.**
**Traubergstrasse 13**
**D-7000 Stuttgart 1 (DE)**
Erfinder : **Hajdu, Johann**
**Bergamastrasse 77**
**D-7030 Böblingen (DE)**
Erfinder : **Knauft, Günter**
**Bergamastrasse 25**
**D-7030 Böblingen (DE)**

(74) Vertreter : **Jost, Ottokarl, Dipl.-Ing.**
**Schönaicher Strasse 220**
**D-7030 Böblingen (DE)**

EP 0 060 909 B1

**Beschreibung**

Die Erfindung betrifft eine Anordnung in einer Datenverarbeitungseinrichtung zur Verkürzung der Zykluszeit nach dem Oberbegriff des Anspruchs 1.

In elektronischen Datenverarbeitungsanlagen werden die Operationsschritte, das sind Verarbeitungs- und Transferschritte, im allgemeinen durch einen Taktgeber gesteuert. Ein solcher Taktgeber besteht im wesentlichen aus einem Oszillator, der eine kontinuierliche meanderförmige Impulsfolge erzeugt, sowie einer nachgeschalteten Einheit, die aus dem meanderförmigen Signal Impulse ausblendet, formt und verstärkt. Die Verstärkung der Taktimpulse muß im allgemeinen so hoch gewählt werden, daß sie ausreicht, um die gesamte Datenverarbeitungsanlage mit Taktsignalen zu versorgen.

Ein solcher Systemaufbau bedingt, daß die Taktimpulse eine Reihe von Schaltstufen vom Oszillator bis zum Verbraucher durchlaufen müssen. Als Verbraucher seien hier beispielsweise die Speicherelemente (Verriegelungsschaltungen) verstanden, aus denen Datenursprungs- oder Quellenregister sowie Resultat- oder Empfangsregister aufgebaut sind.

Die Schaltstufen sind unter Berücksichtigung realer Verhältnisse mit Verzögerungstoleranzen behaftet, die dazu führen, daß ein Taktimpuls einmal früher, ein anderes Mal später als im Idealfall, d. h. im verzögerungsfreien Fall, an einem Speicherelement eines der genannten Register ankommt.

Die Zykluszeit muß aber stets so bemessen sein, daß Daten vom Datenursprungsregister, nach Durchlaufen einer Kette von logischen Schaltungen, im Resultat- oder Empfangsregister sicher und auch noch bei der ungünstigsten Laufzeittoleranz aller beteiligten Elemente abgespeichert werden können. Zur idealen Zykluszeit, die sich nach der Verarbeitungsgeschwindigkeit der Kette von logischen Schaltungen richtet, müssen also stets Zeitzuschläge hinzukommen, die den ungünstigsten Fall der Taktungenauigkeit berücksichtigen. Daraus folgt, daß Taktungenauigkeiten stets zu einer Verlängerung der idealen Zykluszeit führen.

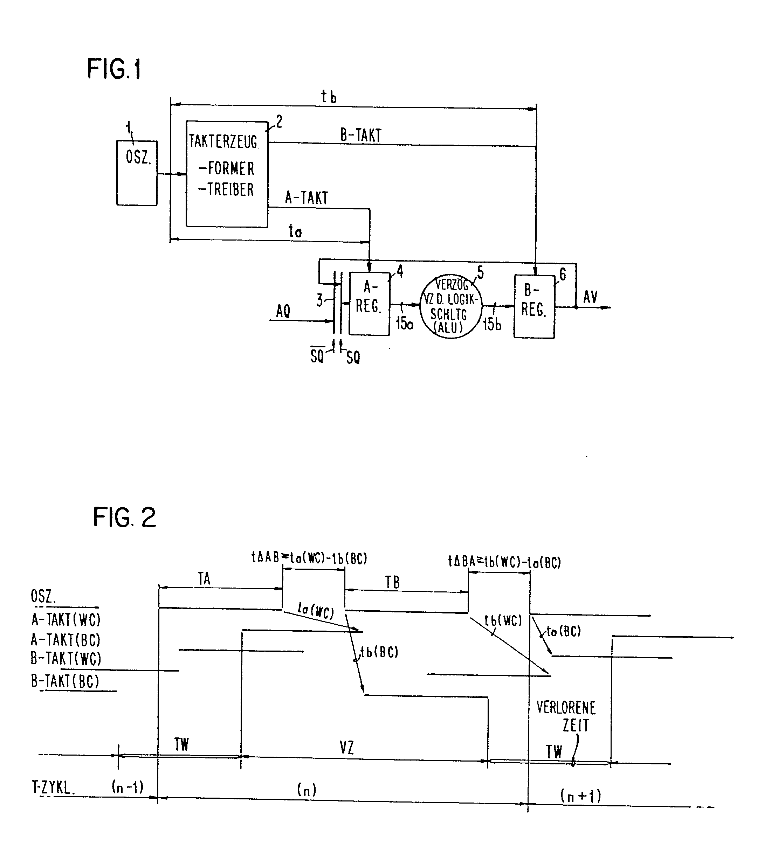

Wie bereits angedeutet wurde, wird die Zykluszeit von derjenigen Kette der hintereinander geschalteten Logikschaltungen bestimmt, die in jedem oder fast jedem Zyklus gebraucht wird und die die längste Laufzeit hat. Bei größeren und hinsichtlich ihrer Geschwindigkeit anspruchsvolleren Datenverarbeitungsanlagen ist diese Kette beispielsweise die arithmetische und logische Einheit (ALU) 5, die in Fig. 1 dargestellt ist. Diese Anordnung spiegelt die bekannte und heute übliche Art der taktgesteuerten Datenverarbeitung wider. Die arithmetische und logische Einheit liegt beispielsweise als Ganzes, quasi als eine « atomische » Logikkette zwischen einem Datenursprungs- oder Quellenregister (A-REG) 4 und einem Resultats- bzw. Empfangsregister (B-REG) 6. Der Ausgang dieses Empfangsregisters ist mit allen Benutzerkomponenten der Datenverarbeitungsanlage, so auch über eine Anordnung von Torschaltungen 3 mit dem Ursprungsregister 4 verbunden, das der arithmetischen und logischen Einheit 5 als Eingangsregister dient. Auf diese Weise können die Ergebnisdaten der arithmetischen und logischen Einheit im unmittelbar nächsten Zyklus auch als Quellendaten benutzt werden.

Wie der in Fig. 2 dargestellte zeitliche Verlauf der Taktsignale bekannter Zeittaktsteuerungen zeigt, setzt sich ein Taktzyklus $T_{ZYKL}$ aus dem Zeitabschnitt TA (das ist die Oszillator-Impulsbreite, die die Impulse des A-Taktes erzeugt), aus dem Zeitabschnitt t$\Delta$AB sowie aus dem Zeitabschnitt TB (Oszillator-Impulsbreite, die die Impulse des B-Taktes erzeugt) und schließlich aus dem Zeitabschnitt t$\Delta$BA zusammen.

Wie Fig. 2 zeigt, gibt der Zeitabschnitt t$\Delta$AB die Breite der Lücke zwischen einem Impuls des Oszillator A-Taktes und dem nächsten Impuls des Oszillator B-Taktes an und setzt sich zusammen aus dem Zeitabschnitt ta(WC) minus dem Zeitabschnitt tb(BC). Darin bedeuten BC die bestmögliche Lage und WC die schlechtest mögliche Lage eines Zeitpunktes, beispielsweise einer Vorderflanke oder einer Rückflanke eines Taktimpulses. Somit definiert ta(BC) den kleinst möglichen zeitlichen Versatz eines Impulses des A-Taktes, bezogen auf einen Impuls des Oszillator-A-Taktes, ta(WC) den größtmöglichen zeitlichen Versatz des genannten Taktimpulses, tb(BC) den kleinst möglichen Versatz eines Impulses des B-Taktes, bezogen auf einen Impuls des Oszillator-B-Takes und tb(WC) den größtmöglichen Versatz dieses Taktimpulses.

Um kritische Zeitbedingungen bei der Datenübertragung oder Datenverarbeitung innerhalb eines Zyklus zu vermeiden, müssen die Impulsbreiten TA und TB mindestens so groß sein, daß ein sicheres Setzen der Speicherelemente, aus denen die Datenursprungs- und Empfangsregister bestehen, gewährleistet ist. Dieses ist stets dann der Fall wenn die genannten Impulsbreiten größer oder höchstens gleich der größten Verzögerung (WC) der Speicherelemente beider Register 4 und 6 ist. Außerdem müssen die Zeitabschnitte t$\Delta$AB und t$\Delta$BA so bemessen sein, daß nie gleichzeitig Taktimpulse am Ursprungsregister 4 und am Empfangsregister 6 anliegen (keine zeitliche Überlappung).

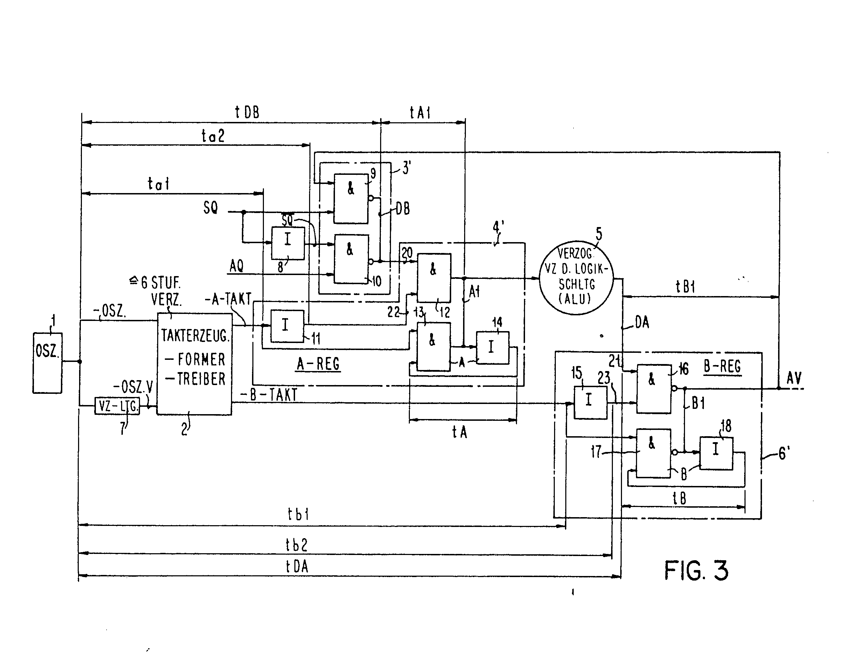

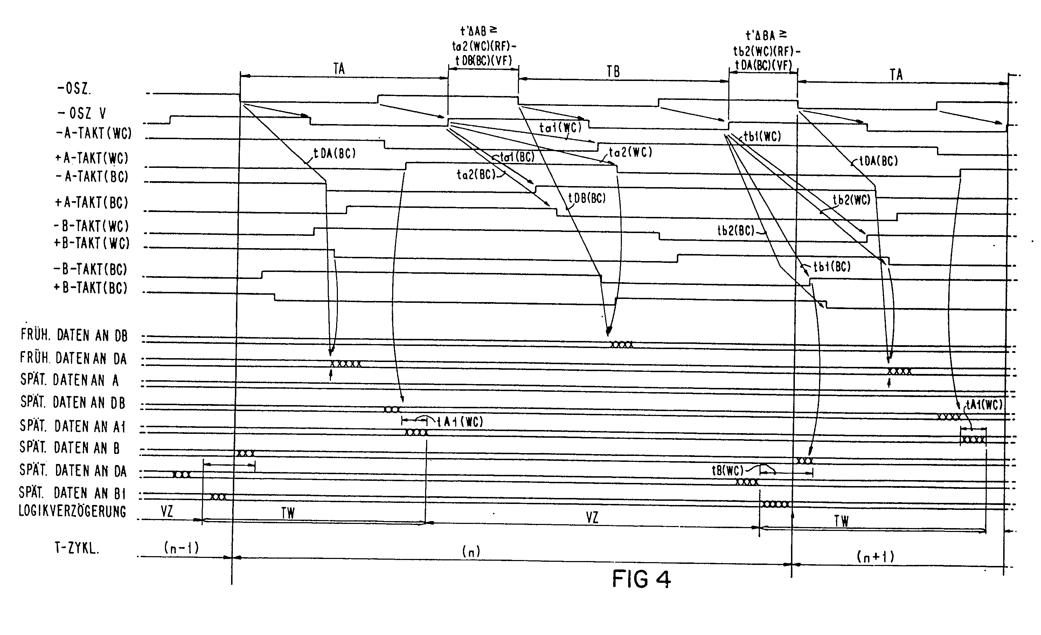

Sind diese Mindestbedingungen erfüllt, so werden die Zeitabschnitte TA, TB, so weit extendiert, daß der Abstand der schlechtest möglichen zeitlichen Lage der Vorderflanke eines Impulses des A-Taktes bis zur bestmöglichen zeitlichen Lage der Rückflanke eines Impulses des B-Taktes der Verzögerungen VZ der längsten Kette von Logikschaltungen entspricht. Diese Beziehung kann für den Idealfall, d. h. ohne Berücksichtigung weiterer Laufzeitverzögerungen, wie sie bei einer realen Anordnung beispielsweise nach Fig. 3 bzw. Fig. 4 vorkommen, in der folgenden Gleichung ausgedrückt werden :

$$T_{ZYKL} = VZ(WC) + (ta(WC) - tb(BC)) + (tb(WC) - ta(BC)) \qquad (1)$$

Der Term (ta(WC) − tb(BC)) + (tb(WC) − ta(BC)) entspricht dem in Fig. 2 mit TW gekennzeichneten Zeitabschnitt. Dieser Zeitabschnitt ist hinsichtlich der Datenverarbeitung selbst effektiv verlorene Zeit, da während dieser Zeit TW keinerlei Durchführung von logischen oder Transferfunktionen möglich ist. Der Zeitabschnitt TW ist somit genau der Betrag, um den eine ideale Zykluszeit $T_{ZYKL}$ (ideal) aufgrund von Verzögerungstoleranzen des A- und B-Taktes verlängert werden muß, damit sichergestellt werden kann, daß die Daten unverstümmelt im Empfangsregister 6 zwischengespeichert werden können.

Reale Verhältnisse, bei denen auch die Registerverzögerungen der bekannten Zeittaktsteuerung berücksichtigt sind, zeigen die Fign. 3 und 4. In den genannten Figuren sind ferner auch folgende praxisnahe Annahmen zugrundegelegt worden :

Für Takterzeugung, -formung und -treiber etwa 6 Stufenverzögerungen und

für die Verzögerung VZ der Logikschaltung (z. B. ALU) etwa 14 Stufenverzögerungen.

Die Verzögerungstoleranzen wurden mit ± 25 % je Logikstufe berücksichtigt.

Die Ausgangssignale des Oszillators (OSZ) 1 werden, wie Fig. 3 zeigt, als —OSZ-Signale und als —$OSZ_V$-Signale dem Takterzeuger 2 zugeführt, der außerdem die Impulsformung und in seinem Treiberteil die Verstärkung der Taktsignale vornimmt. Die Signale —$OSZ_v$ ergeben sich als Ausgangssignale einer Verzögerungsleitung (VZ-LTG) 7, an deren Eingang das Oszillatorsignal —OSZ anliegt. Aus diesen Signalen erzeugt der Takterzeuger 2 die Impulse des A- und B-Taktes, und zwar wird jeweils die negative Polarität, angedeutet durch das Minuszeichen, zu den angeschlossenen Schaltkreisen weitergeleitet.

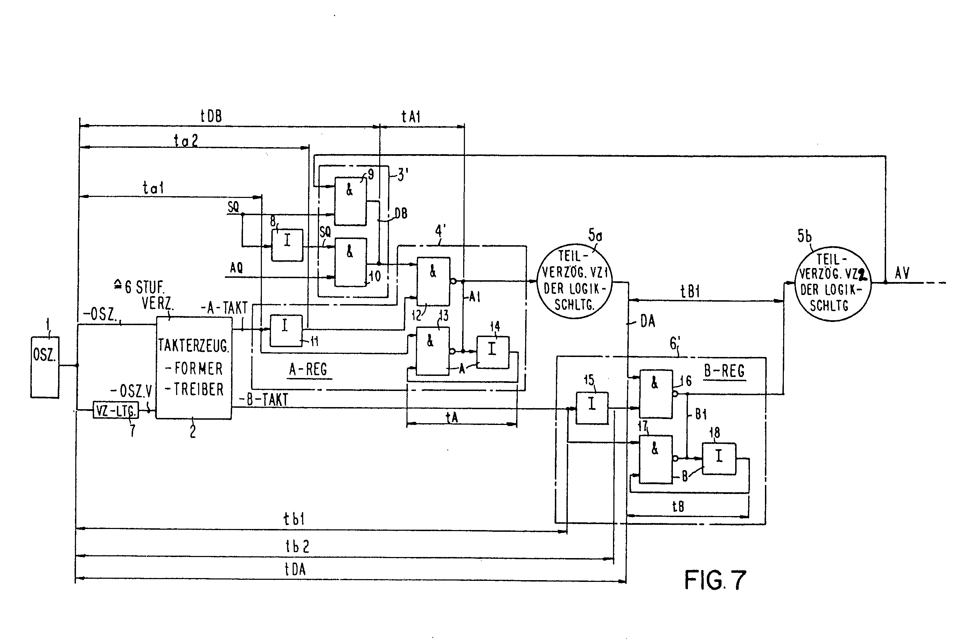

Die in Fig. 1 dargestellte Torschaltung 3, die von den Selektionssignalen $\overline{SQ}$ bzw. SQ gesteuert wird und die Verteilung der Daten am Eingang des A-Registers 4 insofern steuert, als sie entweder die Ausgangsdaten des B-Registers 6 oder Daten von anderen Quellen AQ übernimmt, findet sich in Fig. 3 als Torschaltung 3' wieder, die für jedes Bit des A-Registers vorgesehen ist. Es sei an dieser Stelle erwähnt, daß sowohl für das A-Register 4 als auch das B-Register 6 in Fig. 7 nur eine Stufe 4' bzw. 6' für die Speicherung jeweils eines Bits dargestellt sind. Für breitere A- bzw. B-Register müssen dann eine der Breite dieser Register entsprechende Anzahl von zusätzlichen Stufen 4' bzw. 6' parallel hinzugeschaltet werden.

Die Stufen 4' bzw. 6', aus denen das A-Register bzw. B-Register aufgebaut sind, sind ihrer Natur nach Verriegelungsschaltungen (Latch-Stufen), welche die in Fig. 3 dargestellte Struktur haben. Sie bestehen aus jeweils zwei Inverterschaltungen 11 und 14 sowie aus zwei UND/INVERTER-Schaltungen 12 und 13 im Falle der Registerstufe 4' und aus den beiden Inverterschaltungen 15 und 18 sowie den beiden UND/INVERTER-Schaltungen 16 und 17 im Falle der Registerstufe 6'. Die Registerstufen des A-Registers werden von den -A-Taktimpulsen des A-Taktes und die Stufen des B-Registers von den -B-Taktimpulsen des B-Taktes gesteuert.

Die einzelnen Stufen verfügen über einen Dateneingang 20 bzw. 21, über den sie in der Lage sind, das anliegende Datenbit für die Dauer einer Taktperiode zu speichern. Die Registerstufe ist aber in der Lage, während der Dauer des an ihrem Takteingang 22 bzw. 23 anliegenden Taktsignals ein neues Datensignal über den Eingang 20 bzw. 21 zu übernehmen. Aus den Fign. 1 und 3 geht ferner hervor, daß die Stufen des A-Registers vom A-Takt und die Stufen des B-Registers von den Impulsen des B-Taktes gesteuert werden. Es ist somit erforderlich, daß die in der Logikkette 5 verarbeiteten Daten so rechtzeitig am Eingang 21 der betrachteten Stufe des B-Registers 6' zur Verfügung stehen, daß sie mit dem nachfolgenden Impuls des B-Taktes übernommen werden können.

Die Zeitverhältnisse der Takt- und Datensignale zeigt für die in Fig. 3 angegebenen Laufzeiten im einzelnen die Fig. 4. Die Bedeutung der in Fig. 4 dargestellten Zeitabschnitte geht im wesentlichen aus Fig. 3 hervor. Die in Fig. 4 gewählten Bezeichnungen der Zeitabschnitte unterscheiden sich von denen in Fig. 3 dadurch, daß die erstgenannten noch durch Angaben wie BC und WC ergänzt sind, die den bestmöglichen vom schlechtest möglichen Laufzeitverzögerungsfall unterscheiden.

Unter Berücksichtigung der oben gemachten Annahmen ergibt sich für einen realen Fall die Zykluszeit oder Zykluslänge zu :

$$T_{ZYKL} = VZ(WC) + ta2(WC)\,(VF) - tb1\,(BC)(RF) + (tb2(WC)(RF) - tDA(BC)(VF))$$
$$+ tA1(WC)(VF) + tB(WC)(VF) \qquad (2)$$

Zur Gleichung (2) sind tA1 und tB für die Schaltverzögerungen in den Verriegelungsschaltungen vorgesehen. Ferner sei noch darauf hingewiesen, daß der Takt selbst eine Spanne der Logikverzögerung VZ berücksichtigen muß, die von VZ = 0 bis VZ = VZ(WC) reicht.

Die Zykluszeit $T_{ZYKL}$ bestimmt sich also aus der Verzögerung VZ der (längsten) Kette logischer Schaltungen, die von einem Datensignal innerhalb eines Zyklus durchlaufen werden muß, zuzüglich weiterer Verzögerungszeiten, die einer bestimmten Bandbreite von Verzögerungstoleranzen unterliegen. Hinzu kommt die Laufzeit ta2 für die Vorderflanke eines Impulses des A-Taktes, betrachtet zu ihrem schlechtest möglichen Zeitpunkt, ferner die Laufzeit tA1, die sogenannte Datendurchlaufzeit durch ein Speicherelement des Ursprungsregisters, wobei die Vorderflanke des Impulses dieses Datensignals zu ihrem schlechtesten Zeitpunkt zu betrachten ist, außerdem kommt hinzu die Laufzeit tB des schlechtest

# 0 060 909

möglichen Falles, das ist die Laufzeit, die ein Datensignal längstens benötigt, um vom Eingang des Speicherelementes zum Ausgang und von diesem wieder zum Eingang zurückzugelangen, um mit Sicherheit verriegelt zu werden. Außerdem kommt hinzu, die Differenz der Laufzeiten tb2, schlechtester Fall der Rückflanke, und tDA, bester Fall der Vorderflanke. Wie die Fign. 3 und 4 zeigen, ist tDA die Laufzeit, beginnend vom Oszillator über Takterzeuger (für A-Takt), durch UND-Schalter 13 und durch die Logik-Schaltung bis zum Eingang 21 des UND-Tores 16. Vermindert wird die Zykluszeit dann um den Betrag tb1 der bestmöglichen zeitlichen Lage der Vorderflanke. Der Zeitabschnitt tb1 entspricht der Laufzeit eines Impulses des Oszillator-B-Taktes am Ausgang des Oszillators 1 bis zum Eingang des Speicherelementes im Empfangsregister.

Wie ein Vergleich der Fign. 2 und 4 zeigt, unterscheiden sich die Werte tΔAB und tΔBA der idealen Anordnung nach Fig. 1 von den Werten t'ΔAB und t'ΔBA der realen Schaltung nach Fig. 3. Die genannten Werte stellen jeweils die erforderlichen Lücken zwischen der Rückflanke eines Impulses des Oszillator-A-Taktes und der Vorderflanke eines Impulses des Oszillator-B-Taktes bzw. zwischen der Rückflanke eines Impulses des Oszillator-B-Taktes und der Vorderflanke eines Impulses des Oszillator-A-Taktes dar. Im realen Fall sind diese Lücken größer geworden, so daß sich auch die verlorene Zeit TW, die sich aus der Summe der Werte beider Lücken ergibt, ebenfalls noch größer ist.

Dieser verlorene Zeitabschnitt TW ist, wie bereits erwähnt wurde, derjenige, der die ideale Zykluszeit um eben seinen Betrag verlängert. Dies führt dazu, daß der Grundtakt von elektronischen Datenverarbeitungsanlagen je Zyklus ebenfalls um diesen Betrag länger ist, so daß die reale Verarbeitungsgeschwindigkeit elektronischer Datenverarbeitungsanlagen entsprechend langsamer ist.

Dieser störende Nachteil ist seit langem bekannt. Er wurde bisher durch besondere justierbare Verzögerungs- und Impulsformungsglieder bekämpft, welche die Verzögerungstoleranzen der Taktimpulse verringern, aufgrund von Temperatur- und Belastungsschwankungen jedoch nie ganz beseitigen konnten. Dieses Vorgehen stößt besonders bei elektronischen Datenverarbeitungsanlagen auf Schwierigkeiten, die nach den Prinzipien der Höchstintegrationstechnik (LSI) aufgebaut sind, da gerade hier stets ein Mangel an Anschlußpunkten der Halbleiterchips mit der äußeren Welt besteht, so daß oft für Taktimpulsjustagen solche Anschlußpunkte nicht zur Verfügung stehen. Man hat deshalb auch bereits wesentliche Elemente der Taktimpulsversorgung, wie beispielsweise die Taktverstärker und Impulsformer auf den Halbleiterchips selbst aufgebaut, so daß diese für eine Justage gar nicht mehr zugänglich sind.

Die bekannten Lösungen leiden also unter dem Nachteil, daß sie im Fall der Verwendung justierbarer Verzögerungs- und Formungsglieder recht aufwendig und im Falle der Höchstintegrationstechnik überhaupt nicht mehr justierbar sind.

Die vorliegende Erfindung hat sich daher die Aufgabe gestellt, eine Lösung anzugeben, die es gestattet, die Zykluszeit und damit den Grundtakt elektronischer Datenverarbeitungseinrichtungen so zu wählen, daß sie dem Idealfall entspricht, bei dem die Laufzeittoleranzen unberücksichtigt bleiben.

Obwohl die völlige Beseitigung der Auswirkungen der Verzögerungstoleranzen gewissen Einschränkungen unterliegt, ist diese Beseitigung in allen praktisch vernünftigen Entwurfskonzepten elektronischer Datenverarbeitungseinrichtungen, Array-Strukturen ausgenommen, möglich.

Gelöst wird die Aufgabe der Erfindung durch die im Hauptanspruch angegebenen Merkmale. Vorteilhafte Ausgestaltungen und Weiterbildungen des Gegenstandes der Erfindung sind den Unteransprüchen zu entnehmen.

Durch die Erfindung wird somit der Vorteil erzielt, daß in allen praktisch sinnvollen Fällen des Entwurfskonzeptes von elektronischen Datenverarbeitungsanlagen auf sehr einfache, preisgünstige und zuverlässige Weise die Auswirkungen von Laufzeittoleranzen bei der Bemessung der kürzesten Zykluszeit für die Informationsverarbeitung völlig beseitigt werden. Dieses führt zu einer berechenbaren Zykluszeitverkürzung und damit Geschwindigkeitssteigerung von bis zu 44 % bei der angenommenen Zahl der Schaltkreise im Taktpfad und den angenommenen Toleranzverhältnissen des gewählten realen Beispiels.

Die Zykluszeitverbesserung kann sogar 100 % betragen, dann nämlich, wenn die Gesamtverzögerung eines Taktpfades der Verzögerung VZ(WC) entspricht. Die Gesamtverzögerung eines Taktpfades setzt sich beispielsweise aus den Verzögerungen längs der Übertragungsleitungen 15a, 15b, in Leitungstreibern, in Logik-Arrays und Logikschaltungen, wie beispielsweise der ALU, zusammen, wobei ein Taktpfad sich vom Ausgang des A-Registers 4 in Fig. 1 bis zum Eingang des B-Registers 6 erstreckt.

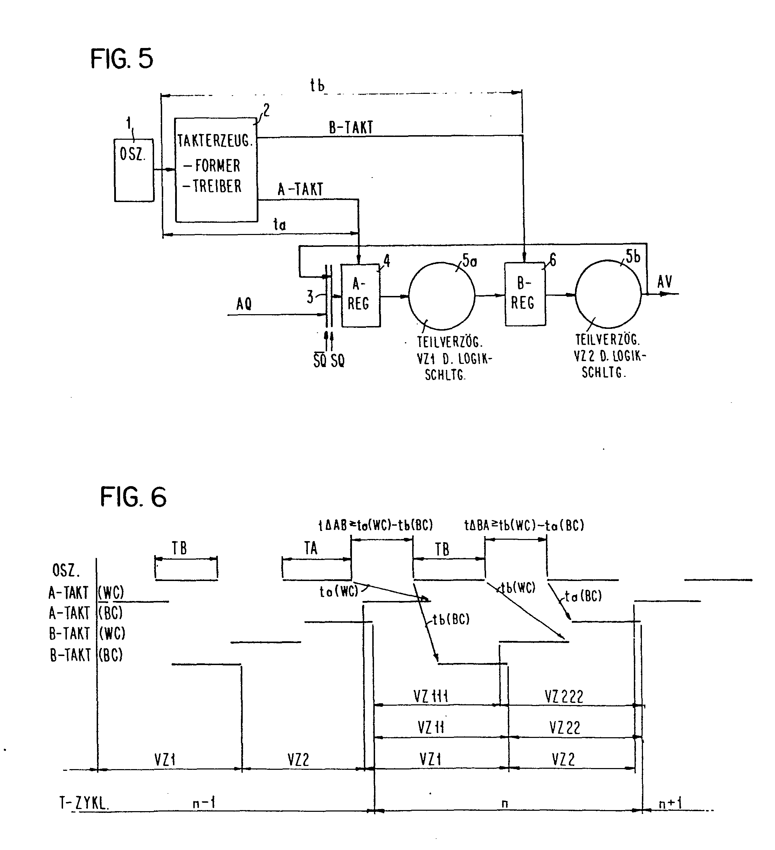

Im folgenden werden zwei Ausführungsbeispiele der Erfindung anhand der Figuren erläutert. Während die Fign. 1 bis 4 zur Darstellung des durch die Erfindung zu lösenden Problems und damit der Aufgabe der Erfindung dienen, zeigen die Fign. 5 bis 8 die erwähnten beiden Ausführungsbeispiele der Erfindung. Im einzelnen zeigen die Figuren :

Figur 1   ein Blockschaltbild einer bekannten Datenverarbeitungsstruktur,

Figur 2   ein Zeitdiagramm zur Darstellung der Zeitabläufe in der bekannten Datenverarbeitungsstruktur nach Fig. 1,

Figur 3   ein ausführlicheres Blockschaltbild der bekannten Datenverarbeitungsstruktur nach Fig. 1,

Figur 4   ein Zeitdiagramm zur Darstellung der Zeitabläufe in der bekannten Datenverarbeitungsstruktur nach Fig. 3,

Figur 5   ein Blockschaltbild einer Datenverarbeitungsstruktur nach der Erfindung,

4

Figur 6 ein Zeitdiagramm zur Darstellung von zeitlichen Abläufen in der Datenverarbeitungsstruktur nach Fig. 5,

Figur 7 ein ausführlicheres Blockschaltbild einer Datenverarbeitungsstruktur nach der Erfindung gemäß Fig. 5 und

Figur 8 ein Zeitdiagramm zur Darstellung der Zeitabläufe in der Datenverarbeitungsstruktur nach der Erfindung gemäß Fig. 7.

Der wesentliche Unterschied zum in der Einleitung ausführlich diskutierten Stand der Technik besteht bei der neuen Datenverarbeitungsstruktur darin, daß während des Zeitabschnittes TW bereits Datenverarbeitungsfunktionen, wie beispielsweise Logikfunktionen oder Transferfunktionen, durchgeführt werden können. Dies ist deshalb möglich, weil die neue Lösung sich generell von dem viele Jahre verwendeten Konzept einer zusammenhängenden « atomischen » Kette von logischen Schaltungen abgewendet hat und zu einer in zwei Teile aufgebrochenen Kette von logischen Schaltungen übergegangen ist. Hierbei wird die Gesamtverzögerung VZ beispielsweise einer arithmetischen und logischen Einheit (ALU) 5, wie sie in den Fign. 1 und 3 dargestellt ist, in zwei Teil-ALUs 5a und 5b mit den Teilverzögerungen VZ1 und VZ2 aufgespalten (wie Fig. 5 zeigt). Es gilt also :

$$VZ = VZ1 + VZ2 \qquad (3)$$

Durch dieses Aufspalten der Kette von Logikschaltungen in zwei Teile ist es nun möglich, während des Zeitabschnittes TW Logikteilfunktionen mit der Teilverzögerung VZ2 auszuführen. Die Funktion des B-Registers 6 ist jetzt die eines Zwischenempfangsregisters und nicht mehr, wie bei der in den Fign. 1 und 3 dargestellten bekannten Anordnung, die eines Endempfangsregisters.

Das Teilungsverhältnis der atomischen Kette von Logikschaltungen kann in den in der Fig. 6 gezeigten Bereichen von VZ1, VZ11, VZ111 bzw. VZ2, VZ22, VZ222, je nach Referenzpunkt RP variiert werden. Es gilt somit für die Zykluszeit folgende einfachere Gleichung :

$$T_{ZYKL} = VZ1(WC) + VZ2(WC) \qquad (4)$$

Wie aus Gleichung (4) zu sehen ist, ist die Zykluszeit nun unabhängig von Takt-Verzögerungstoleranzen. Voraussetzung dafür ist allerdings, daß die Gesamtverzögerung VZ der Logikanordnung gleich oder größer ist als die Summe der Impulsbreiten und -lücken, aber den bereits erwähnten Mindestbedingungen unterliegt :

$$VZ1(WC) + VZ2(WC) \geqslant TAmin + TBmin + t\Delta AB + t\Delta BA \qquad (5)$$

Hier sind anzusetzen für :

$$TAmin = ta(WC) - ta(BC)$$

und

$$TBmin = tb(WC) - tb(BC) \text{ (vgl. S. 6 und 7).}$$

Die Gleichung (4) weist ebenso, wie bereits im Zusammenhang mit der Gleichung (1) ausgeführt wurde, eine geringe Ungenauigkeit auf, da auch bei den hierzu angestellten Überlegungen angenommen wurde, daß die aus Verriegelungsschaltungen aufgebauten Register ein zeitloses Verhalten haben.

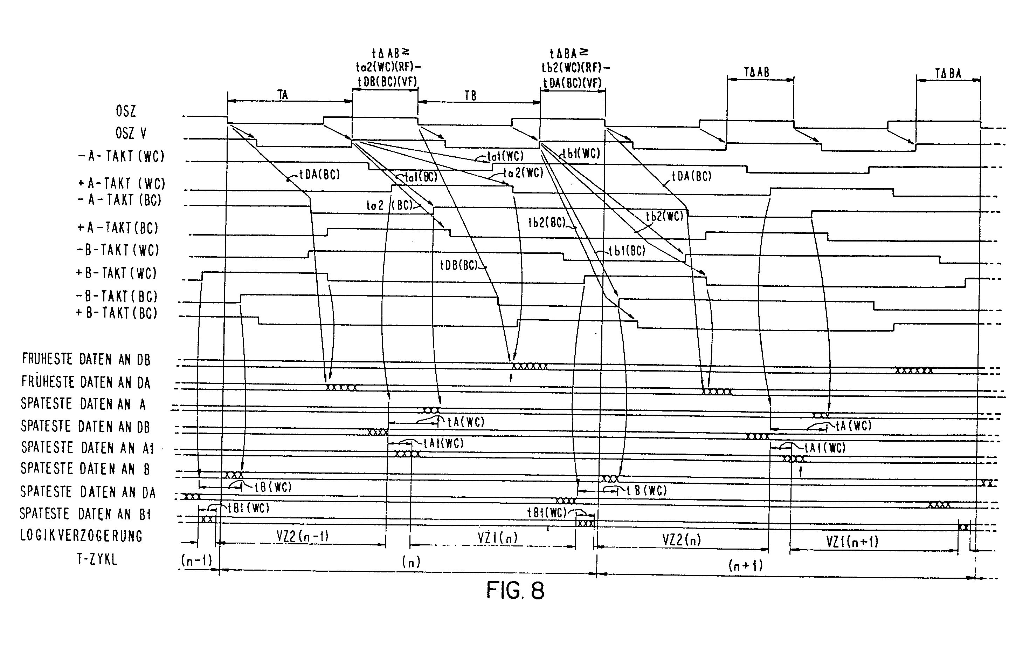

Die realen Verhältnisse, bei denen nun auch die Registerverzögerungen berücksichtigt sind, zeigen die Fign. 7 und 8. In diesen Figuren sind die bereits im Zusammenhang mit den Fig. 4 und 5 gemachten praxisnahen Annahmen berücksichtigt, die auf Seite 4 bereits ausführlich erläutert wurden. Die Gesamtverzögerung der atomaren Kette von logischen Schaltungen wurde lediglich im Verhältnis 1 : 1 geteilt, so daß sowohl auf die Teilverzögerung VZ1, als auch auf die Teilverzögerung VZ2 etwa 7 Stufenverzögerungen fallen. Auch die Verzögerungstoleranz wurde, wie zuvor, mit ± 25 % je Logikstufe berücksichtigt.

Unter diesen Annahmen erhält Gleichung (4) die folgende präzisierte Form :

$$T_{ZYKL} = VZ1 + VZ2 + tA1(WC) + tB1(WC) \qquad (6)$$

Wie das ausführliche Blockdiagramm der Datenverarbeitungsstruktur in Fig. 7 zeigt, sind die Zeitabschnitte tA1(WC) und tB1(WC) die Zeitabschnitte, die für die Verzögerung in den Verriegelungsschaltungen der Registerstufen 4' bzw. 6', aus denen das A-Register bzw. B-Register aufgebaut sind, die also für eine reale Schaltungsanordnung angenommen werden müssen. Für die in den Fign. 7 und 8 dargestellten Zeitabschnitte gelten die gleichen Bezeichnungen und Bedeutungen, wie sie auch im Zusammenhang mit den Fign. 3 und 4 verwendet wurden. Es sind dieses auch die gleichen Zeitabschnitte, die in den angegebenen Gleichungen (2) und (6) für die Zykluszeit $T_{ZYKL}$ mitbestimmend sind. Es ist beispielsweise insbesondere aus den Fign. 4 und 8 ersichtlich, daß für die Dauer eines Zyklus, infolge der Toleranzen der Impulsabstände der verschiedenen Taktfolgen (d. h. − A-Takt, + A-Takt, − B-Takt und + B-Takt unter Berücksichtigung der angenommenen Verzögerungstoleranzen in den einzelnen Abschnitten der Datenverarbeitungsanordnungen nach den Fign. 3 und 7) die frühesten bzw. auch spätesten Zeitpunkte der Daten an den Orten A, A1, B, B1, DA und DB der Datenverarbeitungsstruktur eine bedeutsame Rolle spielen.

Die Gleichung (6) gilt ebenfalls nicht für beliebig kleine Verzögerungswerte der Logikschaltung, also für beliebig kleine VZ1 und VZ2. Viel mehr müssen auch hier Mindestbedingungen eingehalten werden, die im Fall der Gleichung (6) die nachstehende Form annehmen :

$$VZ1 + VZ2 + tA1(WC) + B1(WC) \geqslant TAmin + TBmin + t\Delta AB + t\Delta BA \qquad (7)$$

Hierbei gilt für die minimale Impulsbreite des Oszillatorsignals (vgl. Fig. 8) :

$$TAmin = (ta2(WC)(VF) - ta1(BC)(RF)) + tA(WC)$$

und

$$TBmin = (tb2(WC)(VF) - tb1(BC)(RF)) + tB(WC).$$

Die Zeitabschnitte tA(WC) und tB(WC) sind, wie Fig. 7 zeigt, die Mindestzeiten, die zur Verfügung gestellt werden müssen, um eine Verriegelungsschaltungsstufe des A-Registers bzw. B-Registers noch zuverlässig einzustellen.

Unter den zuvor gemachten realen Annahmen zeigt sich, wie auch ein Vergleich der Fign. 4 und 8 verdeutlicht, daß die Zykluszeit $T_{ZYKL}$ einer bekannten Anordnung, die in Fig. 3 dargestellt ist, um 44 % länger ist als die Zykluszeit der neuen Anordnung, die in Fig. 7 angegeben ist.

## Ansprüche

1. Anordnung zur Verkürzung der Zykluszeit ($T_{ZYKL}$) in einer Datenverarbeitungseinrichtung unter Berücksichtigung der Bedingungen, daß Daten, die von einer Datenquelle (4) bei Anliegen eines Taktimpulses einer A-Taktimpulsquelle (2) ausgesendet werden, nach Durchlaufen einer Kette von Schaltungselementen (5, 15a, 15b) bei jeder Laufzeittoleranz aller an einer auszuführenden Operation beteiligten Taktsteuerungs- und Schaltungselemente (2 bis 6) bei Anliegen eines Taktimpulses einer B-Taktimpulsquelle (2) an einer Empfangsschaltung (6) sicher von dieser übernommen werden können, wobei die Datenquelle (4) von den Taktimpulsen der A-Taktimpulsquelle (2) und die Empfangsschaltung (6) von den Taktimpulsen der B-Taktimpulsquelle (2) gesteuert werden, und die Taktimpulse der beiden Taktimpulsquellen gleiche Frequenz haben und sich zeitlich nicht überlappen, dadurch gekennzeichnet, daß die Kette von Schaltungselementen (5, 15a, 15b) mit einer gegebenen Laufzeitverzögerung (VZ) in zwei Teilketten (5a, 5b) mit entsprechenden Laufzeitverzögerungen (VZ1, VZ2) derart unterteilt ist, daß die erste Teilkette (5a) zwischen Datenquelle (4) und Empfangsschaltung (6) und die zweite Teilkette (5b) zwischen Empfangsschaltung (6) und Datenquelle (4) geschaltet ist.

2. Anordnung nach Anspruch 1, dadurch gekennzeichnet, daß bei einer Aufteilung der Kette logischer Schaltungselemente in Teilketten (5a, 5b) derart, daß die Teilverzögerung (VZ1) der ersten Teilkette (5a) größer ist als die Teilverzögerung (VZ2) der zweiten Teilkette (5b), die Grenzen des Teilungsverhältnisses gegeben sind durch die Bedingungen : der Anfang der ersten Teilverzögerung (VZ1) fällt mit der Vorderflanke (VF) eines Impulses der A-Taktimpulsquelle zusammen und deren Ende mit der Rückflanke (RF) eines Impulses der B-Taktquelle sowie der Anfang der zweiten Teilverzögerung (VZ2) mit dem Beginn der Rückflanke (RF) eines Impulses der B-Taktimpulsquelle und deren Ende mit der Vorderflanke (VF) eines Impulses der A-Taktimpulsquelle.

3. Anordnung nach Anspruch 1, dadurch gekennzeichnet, daß bei einer Aufteilung der Kette von Schaltungselementen in Teilketten (5a, 5b) derart, daß die Teilverzögerung (VZ11) der ersten Teilkette (5a) gleich ist der Teilverzögerung (VZ22) der zweiten Teilkette (5b), die Grenzen des Teilungsverhältnisses gegeben sind durch die Bedingungen : der Anfang der ersten Teilverzögerung (VZ11) fällt mit der Rückflanke (RF) eines Impulses der A-Taktimpulsquelle zusammen und deren Ende mit der Rückflanke (RF) eines Impulses der B-Taktquelle sowie der Anfang der zweiten Teilverzögerung (VZ22) mit dem Beginn der Rückflanke (RF) eines Impulses der B-Taktimpulsquelle und deren Ende mit der Rückflanke (RF) eines Impulses der A-Taktimpulsquelle.

4. Anordnung nach Anspruch 1, dadurch gekennzeichnet, daß bei einer Aufteilung der Kette von Schaltungselementen in Teilketten (5a, 5b) derart, daß die Teilverzögerung (VZ111) der ersten Teilkette (5a) kleiner ist als die Teilverzögerung (VZ222) der zweiten Teilkette (5b), die Grenzen des Teilungsverhältnisses gegeben sind durch die Bedingungen : der Anfang der ersten Teilverzögerung (VZ111) fällt mit der Rückflanke (RF) eines Impulses der A-Taktimpulsquelle zusammen und deren Ende mit der Vorderflanke (VF) eines Impulses der B-Taktquelle sowie der Anfang der zweiten Teilverzögerung (VZ222) mit dem Beginn der Vorderflanke (VF) eines Impulses der B-Taktimpulsquelle und deren Ende mit der Rückflanke (RF) eines Impulses der A-Taktimpulsquelle.

## Claims

1. Arrangement to reduce the cycle time ($T_{ZYKL}$) in a data processing system, taking into consideration the conditions that data which are emitted from a data source (4) upon the application of a clock pulse from an A-clock pulse source (2), after having been propagated through a chain of circuit elements (5, 15a, 15b), upon each propagation tolerance of all clock control circuit elements (2 to 6) when a clock pulse from a B-clock pulse source (2) is applied to a receiver circuit (6) can be safely taken over thereby, the data source (14) being controlled by the clock pulses of the A-clock pulse source (2), and the receiver circuit (6) by the clock pulses of the B-clock pulse source (2), and the clock pulses on the two clock pulse sources having the same frequency and not overlapping with respect to time, characterized in that the chain of circuit elements (5, 15a, 15b) with a given propagation delay (VZ) is divided into two partial chains (5a, b) with corresponding propagation delays (VZ1, VZ2) in such a manner that the first partial chain (5a) is provided between data source (4) and receiver circuit (6) and the second partial chain (5b) between receiver circuit (6) and data source (4).

2. Arrangement as claimed in claim 1, characterized in that when the chain of logic circuit elements is divided into partial chains (5a, 5b) in such a manner that the partial delay (VZ1) of the first partial chain (5a) is greater than the partial delay (VZ2) of the second partial chain (5b) the limits of the ratio of division are given by the conditions : the beginning of the first partial delay (VZ1) coincides with the leading edge (VF) of a pulse from the A-clock pulse source, and by its end with the trailing edge (RF) of a pulse from the B-clock source, and the beginning of the second partial delay (VZ2) with the beginning of the trailing edge (RF) of a pulse from the B-clock pulse source, and its end with the leading edge (VF) of a pulse from the A-clock pulse source.

3. Arrangement as claimed in claim 1, characterized in that upon a division of the chain of logic circuit elements into partial chains (5a, 5b) in such a manner that the partial delay (VZ11) of the first partial chain (5a) equals the partial delay (VZ22) of the second partial chain (5b), the limits of the ratio of division are given by the conditions : the beginning of the first partial delay (VZ11) coincides with the trailing edge (RF) of a pulse from the A-clock pulse source, and its end with the trailing edge (RF) of a pulse of the B-clock source, as well as the beginning of the second partial delay (VZ22) with the start of the trailing edge (RF) of a pulse from the B-clock pulse source, and its end with the trailing edge (RF) of a pulse from the A-clock pulse source.

4. Arrangement as claimed in claim 1, characterized in that upon a division of the chain of logic circuit elements into partial chains (5a, 5b) in such a manner that the partial delay (VZ111) of the first partial chain (5a) is smaller than the partial delay (VZ222) of the second partial chain (5b), the limits of the ratio of division are given by the conditions : the beginning of the first partial delay (VZ111) coincides with the trailing edge (RF) of a pulse from the A-clock pulse source, and its end with the leading edge (VF) of a pulse from the B-clock source, as well as the beginning of the second partial delay (VZ222) with the beginning of the leading edge (VF) of a pulse from the B-clock pulse source, and its end with the trailing edge (RF) of a pulse from the A-clock pulse source.

## Revendications

1. Dispositif pour réduire la durée de cycle ($T_{ZYKL}$) dans un dispositif de traitement de données eu égard aux conditions telles que des données envoyées par une source de données (4) lors de l'application d'une impulsion de synchronisation provenant d'une source d'impulsions de synchronisation A (2) sont prises en charge de façon sûre par un circuit de réception (6) lors de l'application d'une impulsion d'une source d'impulsions de synchronisation B (2) à ce circuit de réception (6) après avoir parcouru une chaîne d'éléments de circuits (5, 15a, 15b) avec chaque fois la tolérance de délai de propagation de tous les éléments de circuit et les éléments de synchronisation (2, 6), ladite source de données (4) étant commandée par les impulsions de synchronisation de ladite source d'impulsions de synchronisation A (2) et ledit circuit de réception (6) par les impulsions de synchronisation de ladite source d'impulsions de synchronisation B (2) et, les impulsions de synchronisation des deux dites sources d'impulsions ayant la même fréquence et ne se recouvrant pas dans le temps, caractérisé en ce que ladite chaîne d'éléments de circuits (5, 15a, 15b) présentant un délai de propagation donné (VZ) est divisée en deux sous-chaînes (5a, 5b) présentant des délais de propagation comparables (VZ1, VZ2) de telle sorte que la première sous-chaîne (5a) est montée entre la source de données (4) et le circuit de réception (6) et la seconde sous-chaîne (5b) entre le circuit de réception (6) et la source de données (4).

2. Dispositif selon la revendication 1, caractérisé en ce que le coefficient de division appliqué au partage de la chaîne d'éléments de circuits logiques en sous-chaînes (5a, 5b) tel que le délai de propagation (VZ1) de la première sous-chaîne (5a) est plus grand que le délai de propagation (VZ2) de la seconde sous-chaîne (5b), est défini par les conditions suivantes : le début dudit délai de propagation (VZ1) coïncide avec le flanc avant (VF) d'une impulsion de la source d'impulsions de synchronisation A et sa fin coïncide avec le flanc arrière (RF) d'une impulsion de la source d'impulsions de synchronisation B et le début dudit délai de propagation (VZ2) coïncide avec le début du flanc arrière (RF) d'une impulsion de la source d'impulsions de synchronisation B et sa fin coïncide avec le flanc avant (VF) d'une impulsion de la source d'impulsions de synchronisation A.

3. Dispositif selon la revendication 1, caractérisé en ce que le coefficient de division appliqué au partage de la chaîne d'éléments de circuits logiques en sous-chaînes (5a, 5b) tel que le délai de propagation (VZ11) de la première sous-chaîne (5a) est égal au délai de propagation (VZ22) de la seconde sous-chaîne (5b), est défini par les conditions suivantes : le début dudit délai de propagation (VZ11) coïncide avec le flanc arrière (RF) d'une impulsion de la source d'impulsions de synchronisation A et sa fin coïncide avec le flanc arrière (RF) d'une impulsion de la source d'impulsions de synchronisation B et le début dudit délai de propagation (VZ22) coïncide avec le début du flanc arrière (RF) d'une impulsion de la source d'impulsions de synchronisation B et sa fin coïncide avec le flanc arrière (RF) d'une impulsion de la source d'impulsions de synchronisation A.

4. Dispositif selon la revendication 1, caractérisé en ce que le coefficient de division appliqué au partage de la chaîne d'éléments de circuits logiques en sous-chaînes (5a, 5b) tel que le délai de propagation (VZ111) de la première sous-chaîne (5a) est plus petit que le délai de propagation (VZ222) de la seconde sous-chaîne (5b), est défini par les conditions suivantes : le début dudit délai de propagation (VZ111) coïncide avec le flanc arrière (RF) d'une impulsion de la source d'impulsions de synchronisation A et sa fin coïncide avec le flanc avant (VF) d'une impulsion de la source d'impulsions de synchronisation B et le début dudit délai de propagation (VZ222) coïncide avec le début du flanc avant (VF) d'une impulsion de la source d'impulsions de synchronisation B et sa fin coïncide avec le flanc arrière (RF) d'une impulsion de la source d'impulsions de synchronisation A.

## FIG.1

## FIG. 2

FIG. 3

FIG 4

0 060 909

## FIG. 5

## FIG. 6

4

FIG. 7

FIG. 8